# EUROPÄISCHE PATENTSCHRIFT

(11) **EP 1 655 582 B1**
(45) Veröffentlichungstag und Bekanntmachung des Hinweises auf die Patenterteilung: **26.08.2009**
(21) Anmeldenummer: 05022085.4
(22) Anmeldetag: 11.10.2005
(51) Int. Cl.: G01D 5/38, G01D 5/36, G01D 5/347

(54) **Positionsmeßsystem**
Position measuring system
Système de mesure de position

(30) Priorität: 03.11.2004 DE 102004053082
(43) Veröffentlichungstag der Anmeldung: 10.05.2006
(73) Patentinhaber: Dr. Johannes Heidenhain GmbH, 83292 Traunreut (DE)
(72) Erfinder: Holzapfel, Wolfgang, 83119 Obing (DE); Reichhuber, Siegfried, 83371 Stein a.d. Traun (DE); Huber-Lenk, Herbert, 83365 Nußdorf/Sondermoning (DE); Drescher, Jörg, 83083 Riedering (DE)

(56) Entgegenhaltungen:
- EP-A2- 1 081 457
- US-A1- 2004 080 755

## Beschreibung

Die Erfindung betrifft ein Positionsmeßsystem mit einer Laserlichtquelle gemäß dem Oberbegriff des Anspruches 1. Solche Positionsmeßsysteme dienen zum Erfassen der Relativposition zweier gegeneinander beweglicher Objekte.

Hochgenaue optische Positionsmeßsysteme sind in vielen Gebieten der Technik unverzichtbar geworden. Kommt es auf höchste Präzision an, sind auf optischen Abtastprinzipien beruhende Positionsmeßsysteme mit großem Abstand führend vor anderen, etwa magnetischen, kapazitiven oder induktiven Abtastprinzipien. In Anwendungen wie beispielsweise der Photolithographie werden bereits Positionsmessungen im Nanometer-Bereich gefordert. Solche Genauigkeiten waren bisher nur mit Interferometern zu leisten. In Zukunft werden aber auch Positionsmeßsysteme in diese Bereiche vorstoßen, die auf der Abtastung eines optischen Maßstabes beruhen. Als 3-Gitter Meßsysteme sind solche interferentiellen Meßsysteme seit langem bekannt: Licht einer Lichtquelle wird an einem Aufspaltgitter in unterschiedliche Beugungsordnungen zerlegt, die an einem Maßstabsgitter reflektiert und auf ein Vereinigungsgitter geworfen werden, wo Strahlen unterschiedlicher Beugungsordnungen miteinander vereinigt und zur Interferenz gebracht werden. Das Aufspaltgitter und das Vereinigungsgitter können dabei als separate Gitter (vorzugsweise wenn der Maßstab lichtdurchlässig ist) oder als ein einziges Gitter (vorzugsweise wenn der Maßstab reflektierend ist) ausgebildet werden. Auch wenn im zweiten Fall nur zwei Gitter körperlich vorhanden sind, so wirkt das erste, aufspaltende Gitter gleichzeitig als Vereinigungsgitter. Auch ein solches System wird daher mit Recht als 3-Gitter Meßsystem bezeichnet. Das Vorsehen von zwei oder drei Gittern für ein 3-Gitter Meßsystem hat hier nichts mit dem eigentlichen Messprinzip zu tun, und kann vom Konstrukteur nach beliebigen Kriterien wie zum Beispiel Beschränkungen in der Strahlführung oder im zur Verfügung stehenden Raum im Abtastkopf entschieden werden.

Die verschiedenen interferierenden Strahlenbündel werden mit Photodetektoren erfasst und so gegeneinander phasenverschobene, positionsabhängige Detektorsignale ausgegeben. Da die Abtastsignale eines solchen interferentiellen Meßsystems weitgehend oberwellenfrei sind, eignen sie sich sehr gut zur Interpolation. Mit einer Maßstabsteilung im Mikrometerbereich, der durch die Interferenz unterschiedlicher Beugungsordnungen bewirkten Frequenzvervielfachung und einer z.B. 4096-fachen Unterteilung der Abtastsignale lassen sich durchaus Genauigkeiten im Nanometerbereich erzielen.

Interferentielle Meßsysteme werden so konzipiert, dass die interferierenden Strahlenbündel möglichst gleiche Weglängen von ihrer Aufspaltung bis zur Vereinigung durchlaufen. Die Interferenz der Strahlenbündel erfolgt daher mit einer Phasendifferenz, die im Idealfall nicht von der Wellenlänge der Lichtquelle abhängt. Aus der Phasendifferenz wird der Positionswert ermittelt, so dass auch dieser nicht von der Wellenlänge abhängt. In der Praxis treten jedoch immer Bauteil-, Montage- und Justiertoleranzen auf, die zu kleinen Weglängenunterschieden führen. Der ausgegebene Positionswert hängt somit leicht von der Wellenlänge der Lichtquelle ab. Für hochpräzise Meßsysteme, die eine sehr hoch auflösende Messung der Phasendifferenz erfordern, muss deshalb eine Lichtquelle mit möglichst konstanter Lichtwellenlänge verwendet werden.

Zudem ist oftmals eine hohe Intensität der Lichtquelle wichtig, um hohe Signalstärken mit minimalen Rauschanteilen erzeugen zu können. Dies gilt insbesondere bei Messgeräten, deren Lichtquellen über Lichtwellenleiter gekoppelt sind.

Bei Messgeräten mit längeren Strahlwegen können die montagebedingten Weglängenunterschiede der interferierenden Strahlenbündel eine Größe erreichen, bei der die Kohärenzlänge der Lichtquelle bedeutend wird. Nur bei einer ausreichenden Kohärenzlänge können in diesen Fällen die Montagetoleranzen in einem vertretbaren Rahmen gehalten werden.

Bei interferentiellen Positionsmeßsystemen höchster Auflösung haben sich Laserdioden als Lichtquelle durchgesetzt. Die wegen ihrer hohen Intensität und großen Kohärenzlänge eigentlich gut geeigneten Single-Mode Laserdioden weisen einen für Positionsmeßsysteme sehr nachteiligen Mangel auf. Es treten in bestimmten Betriebszuständen (vor allem abhängig vom Betriebstrom und von der Temperatur der Laserdiode) Modensprünge auf, die zu einer sprunghaften Wellenlängenänderung führen. Eine solche Wellenlängenänderung führt aber in einem hochgenauen Positionsmeßsystem zu einem Springen der Positionsmessung und häufig auch zum Verzählen eines Inkrementenzählers.

Um solche Probleme zu vermeiden, schlagen die US 4,676,645 und die US 5,000,542 den Einsatz vom Multi-Mode Laserdioden vor, die sehr nahe beieinander liegende Moden aufweisen. In jedem Betriebszustand sind dadurch mehrere Moden besetzt, bei einer Änderung des Betriebszustandes wird die Besetzung der Moden kontinuierlich umverteilt, so dass keine großen Sprünge in der Schwerpunktswellenlänge der Laserdiode auftreten. Allerdings sind Multi-Mode Laserdioden nur für kleinere Lichtleistungen (< 3 - 5 mW) verfügbar. Prinzipbedingt zeigen Laserdioden bei höheren Lichtleistungen Single-Mode Verhalten. Meßsysteme, die eine hohe Lichtleistung verlangen, können daher nicht mit Multi-Mode Laserdioden bestückt werden.

Auch für Anwendungen, die eine große Kohärenzlänge fordern, sind solche Multi-Mode Laserdioden weniger gut geeignet. Deren Einsatz erfordert vielmehr eng tolerierte mechanische und optische Bauteile, um aufgrund der kurzen Kohärenzlänge von Multi-Mode Laserdioden überhaupt ein Interferenzsignal zu erhalten. Solche Positionsmeßsysteme sind daher in der Herstellung aufwändig und damit teuer.

Die JP 2002-39714 schlägt für ein Interferometer die Verwendung einer Single-Mode Laserdiode vor, die mit einem variablen Betriebstrom versorgt wird. Es wird der Betriebsstrom durch ein Modensprungsteuerungsmittel immer wieder (periodisch oder auf Anforderung) so nachgeregelt, dass die Laserdiode in einem Arbeitspunkt betrieben wird, der möglichst weit von einer Modensprungstelle entfernt ist. Dabei werden bei mechanisch fixierter Messanordnung Modensprünge in Abhängigkeit des Betriebsstromes anhand eines irreversibel springenden Positionsausgangssignals detektiert und der Betriebstrom dann so gewählt, dass er mittig zwischen zwei Modensprüngen, also mit größtmöglichem Abstand zu den benachbarten Modensprüngen liegt. Die immer wieder nötige Messung der Lage der Modensprünge und die hierfür notwendige Unterbrechung des eigentlichen Messbetriebes zur Modensprungdetektion sind aber sehr aufwändig und erlauben keine kontinuierliche Positionsmessung.

Die DE 10235669 A1 beschreibt ein Positionsmeßsystem mit einer als Single-Mode Laserlichtquelle ausgebildeten Lichtquelle. Um die beschriebenen Nachteile dieser Laserlichtquelle zu überwinden, wird der Einsatz eines Rückkopplungsmittels vorgeschlagen. Laserlichtquelle und Rückkopplungsmittel wechselwirken derart miteinander, dass in der Laserlichtquelle mehrere eng benachbarte Moden angeregt werden und so ein Quasi-Multi-Mode Betrieb der Single-Mode Laserlichtquelle resultiert. Verwendet man als Laserlichtquelle allerdings eine Laserdiode, so entstehen durch die Wechselwirkung des Rückkopplungsmittels mit der Laserdiode spontane, kurzzeitige Intensitätseinbrüche und Wellenlängenschwankungen, die in der Literatur auch als Low Frequency Fluctuations (LFFs) oder Dropouts bezeichnet werden. Sie sind in Ihrer Wirkung Modensprüngen gleichzusetzen und machen eine genaue Positionsmessung sehr schwierig.

Aufgabe der Erfindung ist es, ein Positionsmeßsystem anzugeben, das auf einfache Art und Weise Probleme mit Modensprüngen einer Laserlichtquelle vermeidet.

Diese Aufgabe wird gelöst durch eine Vorrichtung mit den Merkmalen des Anspruches 1. Vorteilhafte Ausführungsformen ergeben sich aus den Merkmalen, die in den von Anspruch 1 abhängigen Ansprüchen aufgeführt sind.

Ein Positionsmeßsystem zur Bestimmung der Relativposition zweier Objekte verfügt über eine Stromversorgungseinheit zur Erzeugung eines variablen Betriebsstromes für eine Laserlichtquelle. Wenigstens ein Photodetektor erzeugt aus dem von der Laserlichtquelle empfangenen Licht positionsabhängige Ausgangssignale. Im Messbetrieb wird ein mit einem Wechselstromanteil überlagerter Gleichstrom von der Stromversorgungseinheit an die Laserlichtquelle abgeben.

Um Probleme mit plötzlich auftretenden Wellenlängenschwankungen durch Modensprünge einer Laserdiode zu vermeiden, werden nun Modensprünge mit hoher Frequenz erzwungen. Dies führt dazu, dass sich eine für die Positionsmessung relevante Schwerpunktswellenlänge des Laserlichtes ausbildet, deren Änderung mit dem Betriebstrom oder mit der Umgebungstemperatur deutlich weniger stark ist als bei einem Modensprung einer herkömmlich betriebenen Laserdiode.

Zum Erzwingen eines Modensprunges mit hoher Frequenz wird der Gleichstrom zum Betreiben der Laserdiode, die wegen der großen Kohärenzlänge und der hohen Intensität vorzugsweise als Single-Mode Laserdiode ausgebildet ist, mit einem Wechselstromanteil hoher Frequenz überlagert. Da ein Modensprung abhängig vom Betriebsstrom auftritt, wird ein solcher Modensprung periodisch auftreten, wenn der Gleichanteil des Betriebstromes so nahe an einer Modensprungstelle liegt, dass durch den Wechselanteil des Betriebsstromes die Modensprungstelle periodisch überstrichen wird. Je näher der Gleichanteil des Betriebsstromes der Modensprungstelle kommt, desto gleichmäßiger werden dann im zeitlichen Mittel beide Moden besetzt sein. Wenn die Frequenzbandbreite des Meßsystems kleiner als die Modulationsfrequenz der Laserdiode ist, dann werden die Positionssignale nur durch das zeitliche Mittel beider Moden bestimmt. Durch eine langsame Drift des Betriebsstromes oder der Umgebungstemperatur kommt es so nicht mehr zu einer plötzlichen Änderung der Wellenlänge der Laserdiode, vielmehr wird sich eine Schwerpunktswellenlänge ausbilden, die sich entsprechend der kontinuierlichen Umverteilung der beteiligten Moden deutlich weniger schnell mit dem Betriebsstrom oder der Umgebungstemperatur ändert. Dies gilt erst recht, wenn durch den modulierten Betriebsstrom mehrere Modensprünge periodisch und mit hoher Frequenz überstrichen werden.

Die Kohärenzlänge einer Single-Mode Laserdiode, die mit einer Wechselstromamplitude zwischen 1 und 15 mA betrieben wird, liegt typisch immer noch ungefähr bei 100µm bis 5mm, so dass die Laserstrahlung auch im Millimeterbereich noch interferenzfähig bleibt. Die Anforderungen an die mechanische Justage und die Toleranzen der mechanischen und optischen Bauteile bleiben damit in einem vernünftigen Rahmen. Dennoch hilft die im Vergleich zu herkömmlich betriebenen Single-Mode Laserdioden reduzierte Kohärenzlänge unerwünschte Effekte wie die Mit-Modulation vagabundierender Interferenzäste oder Interferenzen zwischen Glasoberflächen (an Lichtwellenleitereinkopplungen, Linsen, Prismen etc.) zu verringern.

Durch die HF-Modulation des Laserdiodenstromes wird außerdem die Rückkopplungsempfindlichkeit einer Laserdiode verringert. Dies ist insbesondere dann ein enormer Vorteil, wenn das Licht der Laserdiode über einen Lichtwellenleiter zum Positionsmeßsystem gebracht werden muss, etwa weil am Ort der Positionsmessung keinerlei Wärmeeintrag erlaubt ist. Dann führen nämlich die Rückkopplungen des Lichtwellenleiteranschlusses zu sogenannten Low Frequenzy Fluctuations (LFFs), die als spontane, kurzzeitige Einbrüche der Lichtleistung der Laserdiode eine genaue Positionsmessung unmöglich machen. Auch solche LFFs werden durch die hochfrequente Modulation des Laserdiodenstromes zum Teil unterdrückt, aber auch in einen Frequenzbereich außerhalb der Bandbreite des Positionsmeßsystems verschoben und beeinflussen die Messung damit nicht mehr.

Besonders vorteilhaft ist die HF-Modulation des Laserdiodenstromes auch in Verbindung mit einem Positionsmeßsystem gemäß der eingangs genannten DE 10235669 A1. Auch die dort durch das Rückkopplungsmittel erzeugten LFFs werden unterdrückt bzw. verschoben und stören bei der Positionsmessung nicht mehr.

In manchen Fällen müssen zur Vermeidung von Schwebungen zwischen der Abtastfrequenz der Photodetektoren und der Hochfrequenzmodulation des Laserdiodenstromes Abtastung und Modulation synchronisiert werden, so dass immer in der selben Phasenlage des Modulators eine Abtastung der Photodetektoren erfolgt. Dies kann etwa über einen gemeinsamen Taktgeber für beide Systeme (Positionsmeßsystem und Modulator) erfolgen.

Um eine zeitliche Mittelung der Wellenlängenmodulation zu erreichen, muss die Modulationsfrequenz des Wechselstromanteils höher als die Bandbreite der Folgeelektronik zur Auswertung der verschiebungsabhängigen Ausgangssignale, und auch höher als die Frequenz der Leistungsregelung der Laserdiode (z.B. Regelung über eine Monitor-Fotodiode) sein.

Zusätzliche Filter in der Folgeelektronik können die Restmodulation der Signale der Photodetektoren unterdrücken. Hierfür eignen sich beispielsweise Tiefpassfilter, aber auch Filter höherer Ordnung. Liegt die Modulationsfrequenz weit genug über der Bandbreite bzw. der Grenzfrequenz der Folgeelektronik des Positionsmeßsystems, kann auf zusätzliche Filter verzichtet werden.

Die Form des Wechselstromanteils kann z.B. rechteckig oder sinusförmig sein. Mit einem bevorzugten dreieckigen Verlauf kann eine kontinuierlichere Schwerpunktwellenlängenverschiebung erreicht werden, da die einzelnen Moden gleichmäßiger gewichtet werden.

Single-Mode Laserdioden, für die die HF-Modulation besonders vorteilhaft ist, sind häufig als indexgeführte Laserdioden aufgebaut, während Multi-Mode Laserdioden meist verstärkungsgeführte Laserdioden sind. Allerdings zeigen auch verstärkungsgeführte Laserdioden ab ca. 3mW Ausgangsleistung Single-Mode Verhalten.

Der Einsatz der HF-Modulation des Betriebsstromes ist auch beim Einsatz von VCSEL-Dioden eine sehr vielversprechende Möglichkeit, da auch bei diesem Diodentyp Wellenlängensprünge auftreten. Obwohl bei VCSEL-Dioden durch die kurze Resonatorlänge nur eine einzige longitudinale Mode anschwingen kann, können dennoch Wellenlängensprünge auftreten. Bei VCSEL-Dioden ist es die die transversale Mode und/oder die Polarisationsrichtung, die sich sprunghaft ändern kann und die auch eine entsprechende Wellenlängenänderung nach sich ziehen kann. Um auch hier einen weichen Übergang zu erzwingen, kann die Modulation des Diodenstromes angewendet werden.

Die Modulation des Lichtquellenstromes kann auch zur Detektion des Weglängenunterschiedes der interferierenden Lichtstrahlenbündel verwendet werden. Eine solche Detektion kann Aufschluss über Bauteil-, Montage- und Justiertoleranzen liefern und zu deren Korrektur herangezogen werden. Die Detektion des Weglängenunterschiedes erfolgt mit den Photodetektoren des Meßsystems, deren Ströme aber nun Verstärkern zugeführt werden, die die hochfrequente Modulation durch die Lichtquelle verstärken können, deren Bandbreite also über der Modulationsfrequenz des Diodenstromes liegen. Die bei Positionsmeßsystemen übliche Phasen- bzw. Positionsauswertung der verstärkten Photoelementsignale ergibt dann Phasen- bzw. Positionswerte, die synchron mit der Modulationsfrequenz hin- und heroszillieren. Die Amplitude dieser hochfrequenten Modulation stellt ein direktes Maß für die Weglängendifferenz der interferierenden Strahlenbündel dar. Diese Amplitude und damit die Weglängendifferenz kann dann durch korrigierende Maßnahmen an Bauteil-, Justier- und/oder Montagetoleranzen auf Null gebracht werden.

Die für die Detektion der hochfrequenten Modulation verwendeten Verstärker werden vorteilhaft in einem separaten Prüfgerät für das Positionsmeßsystem integriert. Alternativ können auch im Messgerät selbst Verstärker mit einer entsprechend hohen Bandbreite verwendet werden, wobei im normalen Messmodus ein den Verstärkern nachgeschalteter Tiefpassfilter die Modulation der Ströme der Photoelemente unterdrückt. Im Detektionsmodus sind die Tiefpassfilter deaktiviert.

Auch eine parallele Weiterverarbeitung der vor dem Tiefpass abgezweigten modulierten und der nach dem Tiefpass abgezweigten nicht modulierten Signale kann für eine vorteilhafte Regelung einer Single-Mode Laserdiode herangezogen werden. Während die nicht modulierten Signale der üblichen Phasen- bzw. Positionsauswertung zugeführt werden, können die modulierten Signale in einer Detektionsschaltung ausgewertet werden. Letztere bestimmt die mit der Modulationsfrequenz der Lichtquelle schwingenden Signalamplituden. Diese steigen an, wenn die Laserdiode in der Nähe eines Modensprunges betrieben wird. Durch bekannte Regeltechniken kann nun dieses Detektionssignal zur Regelung des Gleichanteils des Laserdiodenstromes verwendet werden, so dass die Laserdiode stets im modensprungfreien Bereich betrieben wird.

Weitere Vorteile sowie Einzelheiten der vorliegenden Erfindung ergeben sich aus der nachfolgenden Beschreibung einer bevorzugten Ausführungsform anhand der Figuren. Dabei zeigt
- Figur 1: Ein erfindungsgemäßes Positionsmeßsystem,
- Figur 2: Modensprünge in Abhängigkeit vom Betriebsstrom,
- Figur 3: Modensprünge in Abhängigkeit von der Betriebstemperatur.

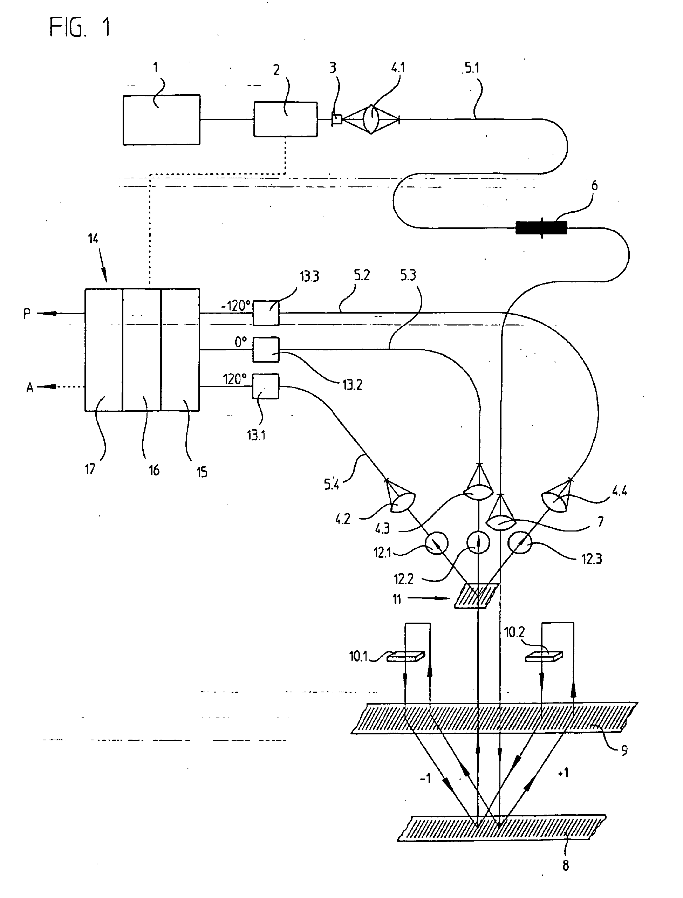

In Figur 1 ist eine besonders bevorzugte Ausführungsform der Erfindung dargestellt. Mit einem Laserdiodentreiber 1 wird der Gleichanteil des Betriebstromes für eine Single-Mode Laserdiode 3 erzeugt, der zusätzlich in einem HF - Modulator 2 moduliert wird. Der Laserdiodentreiber 1 und der Modulator 2 bilden zusammen eine Stromversorgungseinheit für die Laserdiode 3. Es kommen Modulationsfrequenzen zwischen 1 und 1000 MHz, vorzugsweise im Bereich einiger 100 MHz zum Einsatz. Ein Frequenzbereich von 250 - 300 MHz hat sich besonders bewährt. Die Amplitude der Modulation kann so gewählt werden, dass der minimale Betriebsstrom, der auch als Schwellstrom bezeichnet wird und der zum Betreiben der Laserdiode 3 benötigt wird, nicht unterschritten wird. Eine kurzzeitige Unterschreitung des minimalen Betriebsstromes kann aber durchaus vorteilhaft sein, da hierdurch eine besonders starke Störung der Laserdiode 3 hervorgerufen wird, die zum Anschwingen von zusätzlichen Moden führen kann. Der maximale Betriebsstrom der Laserdiode 3 sollte durch die Modulation nicht oder nur kurzzeitig überschritten werden.

Bei einer Laserdiode 3 mit einem minimalen Betriebsstrom von 30mA und einem maximalen Betriebsstrom von 70mA hat sich beispielsweise eine Amplitude von 10mA bewährt, wenn die Laserdiode 3 mit einem Gleichanteil des Betriebsstromes von 50mA betrieben wird. Der Minimale und Maximale Betriebsstrom der Laserdiode 3 definiert deren Arbeitsbereich. Vorteilhaft beträgt die Amplitude des Wechselstromanteils mehr als 10% des mit dem Wechselstrom überlagerten Gleichstromes. Im genannten Beispiel wird zwischen 40 und 60mA moduliert, so dass etwa die Hälfte des Arbeitsbereiches der Laserdiode 3 abgedeckt ist. So werden viele Moden gleichzeitig angeregt, die Änderung der Schwerpunktswellenlänge mit dem Betriebsstrom oder der Temperatur wird besonders klein ausfallen.

Das Licht der Laserdiode 3 wird durch eine Fokussierlinse 4.1 in einen Lichtwellenleiter 5.1 eingekoppelt, der das Licht zum eigentlichen Messort bringt. Die Verwendung eines Lichtwellenleiters 5.1 ermöglicht es in besonders temperaturkritischen Applikationen, einen Wärmeeintrag am Messort zu vermeiden. Der Lichtwellenleiter kann durch einen oder mehrere Faserkoppler 6 unterbrochen sein. Sowohl die Einkopplung des Laserlichts in den Lichtwellenleiter 5.1 als auch in die Faserkoppler 6 kann Rückreflexionen verursachen, die die weiter oben beschriebenen LFFs auslösen. Dennoch können diese Rückreflexionen durchaus erwünscht sein und gezielt eingesetzt werden. Der Lichtwellenleiter 5.1 kann wie in der DE 10235669 A1 beschrieben so ausgelegt werden, dass er als Rückkopplungsmittel mit der Single-Mode Laserdiode 3 derart wechselwirkt, dass die Single-Mode Laserdiode 3 in einen Multi-Mode Betrieb gezwungen wird. Die Länge des Lichtwellenleiters 5.1 wird dabei so gewählt, dass er einen externen Resonator für die Single-Mode Laserdiode 3 bildet. Das der Laserdiode 3 abgewandte Ende des Lichtwellenleiters 5.1 reflektiert dabei einen Teil der Laserstrahlung zurück in die Laserdiode 3. Die Kombination von solchen Rückkopplungsmitteln 5.1 mit der HF-Modulation des Betriebsstromes der Single-Mode Laserdiode 3 durch den Modulator 2 ist besonders vorteilhaft. Die Probleme mit Modensprüngen der Single-Mode Laserdiode 3 werden nämlich so bereits durch den erzwungenen Multi-Mode Betrieb verringert. Die durch das Rückkopplungsmittel 5.1 erzeugt Probleme mit LFFs werden durch die HF-Modulation des Betriebsstromes überwunden.

Das Licht tritt aus dem Lichtwellenleiter 5.1 aus und fällt über eine Kollimatorlinse 7 auf einen reflektierenden Maßstab 8. Dort wird das Licht in zwei Lichtstrahlenbündel +1, -1 (+1. und -1. Ordnung) aufgespaltet, die zwei symmetrische Messzweige bilden. Jedes Lichtstrahlenbündel +1, -1 fällt durch ein Abtastgitter 9, wird von einem Umlenkprisma (nicht dargestellt) über ein λ/4-Plättchen 10.1, 10.2 erneut auf das Abtastgitter 9 geleitet und von dort erneut zum Maßstab 8 gebeugt. Dort vereinigen sich die beiden Lichtstrahlenbündel +1, -1 zu einem Lichtstrahl, um dann von einem Aufspaltgitter 11 in drei separate Lichtstrahlen geteilt zu werden, die durch drei unterschiedlich ausgerichtete Polfilter 12.1, 12.2, 12.3 fallen. Fokussierlinsen 4.2, 4.3, 4.4 koppeln die drei Lichtstrahlen in Lichtwellenleiter 5.2, 5.3, 5.4 ein, die die Lichtstrahlen zu Photodetektoren 13.1, 13.2, 13.3 leiten. Die Photodetektoren 13.1, 13.2, 13.3 geben drei positionsabhängige, um jeweils 120 Grad phasenverschobene Signale -120°, 0°, +120° ab, die von einer Folgeelektronik 14 zu einem Positionswert P verarbeitet werden können. Wichtig ist, dass die Modulation des Betriebsstromes der Laserdiode 3 im Messbetrieb, also während der Erfassung der phasenverschobenen Signale -120°, 0°, +120° der Photodetektoren 13.1, 13.2, 13.3 erfolgt. Nur so ist sichergestellt, dass der negative Einfluss von Modensprüngen und/oder LFFs unterdrückt wird.

Die Folgeelektronik 14 weist eine Verstärkerschaltung 15 zum Verstärken der phasenverschobenen Signale -120°, 0°, +120° der Photodetektoren 13.1, 13.2, 13.3 auf. Eine Auswerteschaltung 17 bildet aus den Phasenverschobenen Signalen -120°, 0°, +120° einen Positionswert P und gibt diesen aus. Ein optionaler Filter 16 sorgt dafür, dass eventuelle hochfrequente Restmodulationen der phasenverschobenen Signale -120°, 0°, +120° die Positionswertermittlung nicht beeinflussen.

Die Photodetektoren 13.1, 13.2, 13.3 werden in der Folgeelektronik 14 mit einer bestimmten Abtastfrequenz abgetastet, um die phasenverschobenen Signale -120°, 0°, +120° für die Weiterverarbeitung zur Verfügung zu stellen. Zur Vermeidung von Schwebungen kann es wie bereits erwähnt notwenig sein, den Modulator 2 mit der Abtastung der Photodetektoren 13.1, 13.2, 13.3 zu synchronisieren. Dies ist in der Figur 1 durch die gestrichelte Ver-bindung zwischen dem Modulator 2 und der Folgeelektronik 14 angedeutet.

Im in der Figur 1 dargestellten Ausführungsbeispiel wird von der Folgeelektronik 14 auch die Amplitude A der hochfrequenten (Frequenz des Modulators 2) Phasenmodulation der phasenverschobenen Signale -120°, 0°, +120° ausgegeben. Da diese Amplitude A ein Maß für den Weglängenunterschied der interferierenden Lichtstrahlenbündel +1, -1 ist, kann anhand dieser Amplitude A ein Abgleich des Weglängenunterschiedes vorgenommen werden. Es können die optischen Elemente im Strahlengang mechanisch so justiert werden, bis die Amplitude A verschwindet oder unter einen vorgegebenen Grenzwert fällt.

Um in der Auswerteschaltung die Amplitude A bestimmen zu können, müssen die positionsabhängigen Signale -120°, 0°, +120° der Photodetektoren 13.1, 13.2, 13.2 einem Verstärker 15 zugeführt werden, dessen Bandbreite über der Frequenz des Wechselstromanteils liegt.

Die verstärkten Signale müssen dann zur Bestimmung des Positionssignals P vom Filter 16 von der hochfrequenten Modulation mit der Frequenz des Modulators 2 befreit werden. Dieser Filter 16 wirkt aber nicht auf die Signale, die zur Bestimmung der Amplitude A herangezogen werden. In der Auswerteelektronik 14 muss der Teil, der die Amplitude A bestimmt, eine ausreichende Bandbreite oberhalb der Modulationsfrequenz der Laserlichtquelle 3 aufweisen.

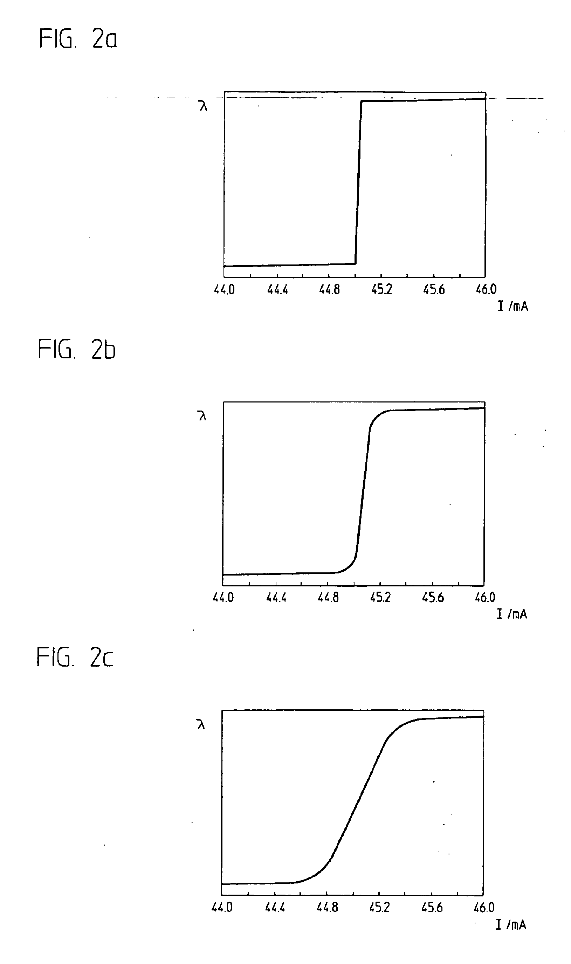

In Figur 2a ist zum näheren Verständnis das Verhalten einer Single-Mode Laserdiode ohne HF-modulierten Betriebsstrom aufgezeichnet. Mit zunehmendem Betriebsstrom ändert sich die Wellenlänge des emittierten Lichtes nur langsam, bis bei ca. 45mA ein Modensprung auftritt. Dieser führt zu einem sehr ausgeprägten Sprung in der Wellenlänge. Überlagert man den Betriebsstrom mit einem HF-Anteil der Frequenz 2 MHz und der Amplitude 3mA (Figur 2b) bzw. 6mA (Figur 2c), so erkennt man, dass der Modensprung sich nun in einem deutlich verrundeten Anstieg der Wellenlänge äußert. Die den Figuren 2a bis 2c zugrundeliegenden Messungen wurden bei konstanter Temperatur durchgeführt, um einen durch variierenden Betriebstrom induzierten Modensprung zu zeigen.

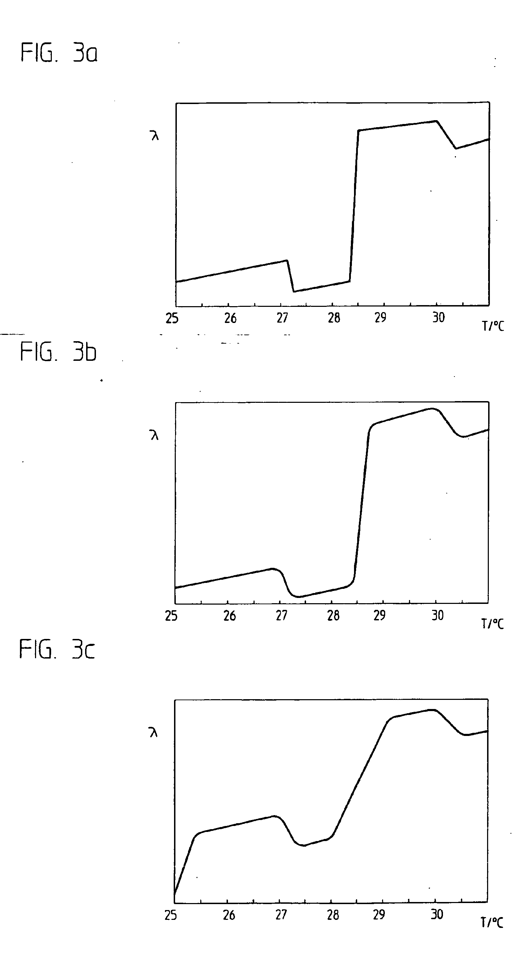

In Figur 3a erkennt man Modensprünge, die bei konstantem Betriebsstrom der Laserdiode, aber variabler Temperatur auftreten. Im untersuchten Temperaturbereich treten hier sogar mehrere Modensprünge auf. Ohne jede Modulation des Betriebsstromes sind die Wellenlängensprünge sehr steil. Den Figuren 3b und 3c liegt wieder eine Strommodulation mit 2MHz zugrunde, diesmal mit Amplitude 6mA (Figur 2b) bzw. 12 mA (Figur 2c). Wieder erkennt man, dass die Wellenlängensprünge deutlich verrundet sind.

Das beschriebene Positionsmeßsystem verfügt über eine recht aufwändige Optik. In Kombination mit derart aufwändigen Positionsmeßsystemen macht die Modulation des Betriebsstromes auch besonders Sinn, um wirklich hochgenaue Messungen ohne den negativen Einfluss von Modensprüngen und LFFs durchführen zu können. Das Prinzip der HF-Modulation des Betriebsstromes lässt sich aber auch für einfachere Positionsmeßsysteme anwenden. So könnte beispielsweise ein Meßsystem zum Vermessen einer Werkzeugform, das auf dem Lichtschrankenprinzip beruht, ebenfalls von einem modulierten Betriebsstrom profitieren. Auch hier können nämlich LFFs dazu führen, dass eine Unterbrechung des Lichtstrahl detektiert wird, obwohl nur die verwendete Laserdiode einen Leistungseinbruch hatte. So lassen sich Werkzeuge wie Fräser, Bohrer und ähnliche mit sehr hoher Auflösung ausmessen.

## Patentansprüche

1. Positionsmeßsystem zur Bestimmung der Relativposition zweier Objekte, mit einer Stromversorgungseinheit (1, 2) zur Erzeugung eines variablen Betriebsstromes für eine Laserlichtquelle (3), sowie mit wenigstens einem Photodetektor (13.1, 13.2, 13.3) zur Erzeugung positionsabhängiger Ausgangssignale (-120°, 0°, +120°) aus dem von der Laserlichtquelle (3) empfangenen Licht, **dadurch gekennzeichnet, dass** im Messbetrieb ein mit einem aus einem HF-Modulator (2) generierter Wechselstromanteil überlagerter Gleichstrom von der Stromversorgungseinheit (1, 2) an die Laserlichtquelle (3) abgebbar ist.

2. Positionsmeßsystem nach Anspruch 1, **dadurch gekennzeichnet, dass** die Laserlichtquelle (3) eine Single-Mode Laserdiode ist.

3. Positionsmeßsystem nach Anspruch 1 oder 2, **dadurch gekennzeichnet, dass** die Stromversorgungseinheit aus einem Laserdiodentreiber (1) und einem HF-Modulator (2) besteht.

4. Positionsmeßsystem nach Anspruch 1, 2 oder 3, **dadurch gekennzeichnet, dass** die Frequenz des Wechselstromanteils zwischen 1 MHz und 1000 MHz liegt.

5. Positionsmeßsystem nach einem der vorhergehenden Ansprüche, **dadurch gekennzeichnet, dass** eine Amplitude des Wechselstromanteils mehr als 10% des mit dem Wechselstrom überlagerten Gleichstromes beträgt.

6. Positionsmeßsystem nach einem der vorhergehenden Ansprüche, **dadurch gekennzeichnet, dass** die Frequenz des Wechselstromanteils größer ist als eine Bandbreite einer Folgelektronik (14) zur Bildung eines Positionssignals (P) aus den positionsabhängigen Ausgangssignalen (-120°, 0°, +120°).

7. Positionsmeßsystem nach einem der Ansprüche 2 - 6, **dadurch gekennzeichnet, dass** die Single-Mode Laserdiode (3) mit Rückkopplungsmitteln (5.1) verbunden ist, die die Single-Mode Laserdiode (3) in einen Multi-Mode Betrieb zwingen.

8. Positionsmeßsystem nach Anspruch 7, **dadurch gekennzeichnet, dass** das Rückkopplungsmittel (5.1) ein Lichtwellenleiter ist, dessen Länge so gewählt ist, dass er einen externen Resonator zum Anregen mehrerer Lasermoden in der Single-Mode Laserdiode (3) bildet.

9. Positionsmeßsystem nach einem der vorhergehenden Ansprüche, **dadurch gekennzeichnet, dass** der wenigstens eine Photodetektor (13.1, 13.2, 13.3) positionsabhängige Ausgangssignale (-120°, 0°, +120°) aus Licht erzeugt, das über Lichtwellenleiter (5.2, 5.3, 5.4) dem wenigstens einen Photodetektor (13.1, 13.2, 13.3) zugeführt ist.

10. Positionsmeßsystem nach einem der Ansprüche 6 - 9, **dadurch gekennzeichnet, dass** der HF-Modulator (2) und die Folgeelektronik (14) miteinander synchronisiert sind.

11. Verfahren zum Abgleich des Weglängenunterschiedes von interferierenden Lichtstrahlenbündeln (+1, -1) in einem Positionsmeßsystem nach einem der Ansprüche 1 - 10, nach dem die positionsabhängigen Signale (-120°, 0°, +120°) der Photodetektoren (13.1, 13.2, 13.2) einem Verstärker (15) zugeführt werden, dessen Bandbreite über der Frequenz des Wechselstromanteils liegt.

12. Verfahren nach Anspruch 11, nach dem eine Amplitude (A) einer aus den Ausgangssignalen (-120°, 0°, +120°) der Photodetektoren (13.1, 13.2, 13.3) abgeleiteten hochfrequenten Phasenmodulation als Maß für den Weglängenunterschied herangezogen wird.

13. Verfahren nach Anspruch 11, nach dem die Amplitude der aus den Ausgangssignalen der Photodetektoren (13.1, 13.2, 13.3) abgeleiteten hochfrequenten Phasenmodulation (A) und damit der Weglängenunterschied der interferierenden Lichtstrahlenbündel (+1, -1) durch mechanische Justage des Positionsmeßsystems minimiert wird.

## Claims

1. A position measuring system for determining the relative position of two objects, comprising a power supply unit (1, 2) for generating a variable operating current for a laser light source (3) as well as comprising at least one light sensor (13.1, 13.2, 13.3) for generating positionally dependent output signals (-120°, 0°, +120°) from the light received by the laser light source (3), **characterized in that** during the measuring operation a direct current, which is superimposed with an alternating current generated from an HF modulator (2), can be released to the laser light source (3) by the power supply unit (1, 2).

2. The position measuring system according to claim 1, **characterized in that** the laser light source (3) is a single mode laser diode.

3. The position measuring system according to claim 1 or 2, **characterized in that** the power supply unit consists of a laser diode driver (1) and an HF modulator (2).

4. The position measuring system according to claim 1, 2 or 3, **characterized in that** the frequency of the portion of the alternating current lies between 1 MHz and 1000 MHz.

5. The position measuring system according to one of the preceding claims, **characterized in that** an amplitude of the portion of the alternating current is more than 10% of the direct current, which is superimposed with the alternating current.

6. The position measuring system according to one of the preceding claims, **characterized in that** the frequency of the portion of the alternating current is greater than a bandwidth of a sequential electronics (14) for forming a position signal (P) from the positionally dependent output signals (-120°, 0°, +120°).

7. The position measuring system according to one of claims 2-6, **characterized in that** the single-mode laser diode (3) is connected to feedback means (5.1), which force the single-mode laser diode (3) into a multi-mode operation.

8. The position measuring system according to claim 7, **characterized in that** the feedback means (5.1) is an optical wave guide, the length of which is chosen in such a manner that it forms an external resonator for exciting a plurality of laser modes in the single-mode laser diode (3).

9. The position measuring system according to one of the preceding claims, **characterized in that** the at least one light sensor (13.1, 13.2, 13.3) generates positionally dependent output signals (-120°, 0°, +120°) from light, which is fed to the at least one light sensor (13.1, 13.2, 13.3) via optical wave guides (5.2, 5.3, 5.4).

10. The position measuring system according to one of claims 6-9, **characterized in that** the HF modulator (2) and the sequential electronics (14) are synchronized with one another.

11. A method for compensating the wavelength differences of interfering bundles of light beams (+1, -1) in a position measuring system according to one of claims 1-10 according to which the positionally dependent signals (-120°, 0°, +120°) of the light sensors (13.1, 13.2, 13.2) are fed to an amplifier (15), the bandwidth of which lies above the frequency of the portion of the alternating current.

12. The method according to claim 11, according to which an amplitude (A) of a high-frequency phase modulation, which is derived from the output signals (-120°, 0°, +120°) of the light sensors (13.1, 13.2, 13.3), is used as measure for the wavelength difference.

13. The method according to claim 11, according to which the amplitude of the high-frequency phase modulation (A) derived from the output signals of the light sensors (13.1, 13.2, 13.3) and thus the wavelength difference of the interfering bundles of light beams (+1, -1) is minimized by means of a mechanical adjustment of the position measuring system.

## Revendications

1. Système de mesure de position pour la détermination de la position relative de deux objets, avec une unité d'alimentation en courant (1, 2) pour la production d'un courant de service variable pour une source de lumière laser (3), ainsi qu'avec au moins un photo-détecteur (13.1, 13.2, 13.3) pour la production de signaux de sortie (-120°, 0°, +120°) en fonction de la position, à partir de la lumière reçue par la source de lumière laser (3), **caractérisé en ce que** dans le mode mesure, un courant continu, auquel est superposée une part de courant alternatif généré à partir d'un modulateur HF (2), peut être fourni à la source de lumière laser (3) par l'unité d'alimentation en courant (1, 2).

2. Système de mesure de position selon la revendication 1, **caractérisé en ce que** la source de lumière laser (3) est une diode laser monomode.

3. Système de mesure de position selon l'une des revendications 1 ou 2, **caractérisé en ce que** l'unité d'alimentation en courant est constituée d'un circuit d'attaque de diode laser (1) et d'un modulateur HF (2).

4. Système de mesure de position selon l'une des revendications 1, 2 ou 3, **caractérisé en ce que** la fréquence de la part de courant alternatif est comprise entre 1 MHz et 1000 MHz.

5. Système de mesure de position selon l'une des revendications précédentes, **caractérisé en ce qu'**une amplitude de la part de courant alternatif représente plus de 10% du courant alternatif auquel est superposé le courant alternatif.

6. Système de mesure de position selon l'une des revendications précédentes, **caractérisé en ce que** la fréquence de la part de courant alternatif est supérieure à la largeur de bande d'une électronique consécutive (14) pour la formation d'un signal de position (P) à partir des signaux de sortie dépendants de la position (-120°, 0°, +120°).

7. Système de mesure de position selon l'une des revendications 2 à 6, **caractérisé en ce que** la diode laser monomode (3) est reliée à des moyens de rétroaction (5.1) forçant la diode laser monomode (3) à fonctionner en multi-mode.

8. Système de mesure de position selon la revendication 7, **caractérisé en ce que** le moyen de rétroaction (5.1) est un guide d'onde de lumière, dont la longueur est choisie de manière à ce qu'il forme un résonateur externe pour l'activation de plusieurs modes laser dans la diode laser monomode (3).

9. Système de mesure de position selon l'une des revendications précédentes, **caractérisé en ce que** l'au moins un photo-détecteur (13.1, 13.2, 13.3) produit des signaux de sortie (-120°, 0°, +120°) en fonction de la position, à partir de la lumière qui est fournie à l'au moins un photo-détecteur (13.1, 13.2, 13.3) par le biais du guide d'onde de lumière (5.2, 5.3, 5.4).

10. Système de mesure de position selon l'une des revendications 6 à 9, **caractérisé en ce que** le modulateur HF (2) et l'électronique consécutive (14) sont synchronisés l'un par rapport à l'autre.

11. Procédé pour la compensation d'une différence de longueur de parcours de faisceaux lumineux interférant entre eux (+1, -1), dans un système de mesure de position selon l'une des revendications 1 à 10, selon lequel les signaux dépendants de la position (-120°, 0°, +120°) des photo-détecteurs (13.1, 13.2, 13.3) ont été fournis à un amplificateur (15), dont la largeur de bande est supérieure à la fréquence de la part de courant alternatif.

12. Procédé selon la revendication 11, selon lequel une amplitude (A) d'une modulation de phase à haute fréquence, dérivée des signaux de sortie (-120°, 0°, +120°) des photo-détecteurs (13.1, 13.2, 13.3), est utilisée comme mesure pour la différence de longueur de parcours.

13. Procédé selon la revendication 11, selon lequel l'amplitude de la modulation de phase à haute fréquence (A), dérivée des signaux de sortie des photo-détecteurs (13.1, 13.2, 13.3), et donc la différence de longueur de parcours des faisceaux lumineux interférant entre eux (+1, -1), sont minimisés par ajustement mécanique du système de mesure de position.
